# EUROPEAN PATENT SPECIFICATION

(11) **EP 2 181 132 B1**
(45) Date of publication and mention of the grant of the patent: **26.04.2017**
(21) Application number: 08796224.7
(22) Date of filing: 17.07.2008
(51) Int. Cl.: C08G 18/48, C08G 18/66, C09D 175/08, C08G 18/08, C08G 18/28, C08G 18/12

(54) **AQUEOUS POLYURETHANEUREA COMPOSITIONS INCLUDING DISPERSIONS AND FILMS**
WÄSSRIGE POLYURETHANHARNSTOFFZUSAMMENSETZUNGEN MIT DISPERSIONEN UND FILMEN
COMPOSITIONS DE POLYURÉTHANNEURÉE AQUEUSES COMPRENANT DES DISPERSIONS ET DES FILMS

(30) Priority: 20.07.2007 US 780819
(43) Date of publication of application: 05.05.2010
(73) Proprietor: Invista Technologies S.à r.l., 9000 St. Gallen (CH)
(72) Inventor: COVELLI, Carmen, A., Chadds Ford, PA 19317 (US); FARMER, Douglas, K., Greensboro, NC 27407 (US); LIU, Hong, Waynesboro, VA 22980 (US); YODER, Gregory, L., Charlottesville, VA 22911 (US)
(74) Representative: Cockerton, Bruce Roger
(86) International application number: PCT/US2008/070255
(87) International publication number: WO 2009/014973

(56) References cited:
- WO-A-99/45050

## Description

### BACKGROUND OF THE INVENTION

### Field of the Invention

The present invention relates to a method of preparing a polyurethaneurea aqueous dispersion and polyurethaneurea aqueous dispersions formed by said method. Also included are compositions comprising a polyurethaneurea aqueous dispersion formed by the method of the invention.

### Summary of Related Technology

Polyurethanes (including polyurethaneureas) can be used as adhesives for various substrates, including textile fabrics. Typically, such polyurethanes are either fully formed non-reactive polymers or reactive isocyanate-terminated prepolymers. Such reactive polyurethane adhesives often require extended curing time to develop adequate bonding strength, which can be a disadvantage in manufacturing processes. In addition, the isocyanate groups of the polyurethanes are known to be sensitive to moisture, which limits the storage stability and reduces the shelf life of the product incorporating such polyurethanes.

Typically, such polymers, when fully formed, are either dissolved in a solvent (solvent borne), dispersed in water (water borne), or processed as thermoplastic solid materials (hot melt). Notably, solvent-based adhesives face ever-tightening health and environmental legislation aimed at reducing volatile organic compound (VOC) and hazardous air pollutant (HAP) emissions. Accordingly, alternatives to conventional solvent-based products may be required in the future.

Hot-melt adhesives, although environmentally safe and easily applied as films, generally have high set and poor recovery when subject to repeated stretch cycles. Therefore, adhesives that overcome the performance concerns of hot-melt adhesives are needed. Desirably, such adhesives will also provide other benefits to the fabric such as flexibility, shape retention and air permeability compared to conventional thermoplastic polyurethane and hot-melt adhesives.

WO 99/45050 describes water-soluble films suitable for water-dissolvable packaging comprising a polyurethane polymer having defined amounts of poly(ethylene oxide) (and optionally poly(propylene oxide)) groups and acid (preferably carboxyl) groups at least 50 % neutralised with a base, at least a proportion of which is of the non-volatile type, the polyurethane being made by chain extension of a urethane prepolymer. Document EP 0 792 900 A1 is directed to compositions comprising a polyurethaneurea aqueous dispersion. In example 3 a prepolymer is prepared from PPG (Mw 2000), dimethylolpropionic acid, polyether LB25 and a polyisocyanate. Then N,N-dimethylaminoethanol is added as a neutralizing agent, the polymer is dispersed into water and finally chain extended with isophorone diamine and hydrazine.

### SUMMARY OF THE INVENTION

The present invention provides a method of preparing a polyurethaneurea aqueous dispersion. The method includes:
(a) preparing a prepolymer composition including the reaction product of
   (i) at least one polyol selected from polyethers, polyesters, polycarbonates, and combinations thereof, wherein the polyol has a number average molecular weight of 600 to 4000;
   (ii) a polyisocyanate including a member selected from the group consisting of aromatic diisocyantes, aliphatic diisocyanates, cycloaliphatic diiosocyanates, and combinations thereof;
   (iii) at least one diol compound including: (i) hydroxy groups capable of reacting with polyisocyanate, and (ii) at least one carboxylic acid group capable of forming a salt upon neutralization, wherein said at least one carboxylic acid group is incapable of reacting with the polyisocyanate;
   wherein said prepolymer has a %NCO of 1.3 to 2.6;
(b) dispersing the prepolymer in an aqueous composition including a neutralizing agent and a surfactant;
(c) chain extending the prepolymer to form the polyurethaneurea dispersion wherein the polyurethaneurea polymer has a weight average molecular weight from about 40,000 to about 250,000; and
(d) controlling the molecular weight of the polymer through the use of a blocking agent for isocyanate groups;wherein said blocking agent is at least one mono-functional alcohol and said blocking agent is added to said prepolymer composition at a time selected from (a) before formation of said prepolymer, (b) after formation of said prepolymer, (c) during formation of said prepolymer, and combinations thereof.

In another embodiment are polyurethaneurea aqueous dispersions formed by the method of the invention and compositions comprising said polyurethaneurea aqueous dispersions. Compositions comprising the polyurethaneurea aqueous dispersions may be formed into films or other shaped articles. Such films may be prepared by casting and drying the dispersions. These films may be coated on or in contact with a substrate.

Stable dispersions may be prepared on a commercial scale, including batches of greater than about 500 gallons, and greater than about 1000 gallons.

### DETAILED DESCRIPTION OF THE INVENTION

Aqueous polyurethane dispersions falling within the scope of the present invention are provided by the method of the invention from particular urethane prepolymers, which are described herein.

A segmented polyurethaneurea for making a polyurethaneurea dispersion includes: a) a polyol or a polyol copolymer or a polyol mixture of number average molecular weight between 500 to 5000 (such as from about 600 to 4000 and 600 to 3500), including but not limited to polyether glycols, polyester glycols, polycarbonate glycols, polybutadiene glycols or their hydrogenated derivatives, and hydroxy-terminated polydimethylsiloxanes; b) a polyisocyanate including diisocyanates such as aliphatic diisocyanates, aromatic diisocyanates and alicyclic diisocyanates; and c) a diol compound d including: (i) hydroxy groups capable of reacting with polyisocyanate, and (ii) at least one carboxylic acid group capable of forming a salt upon neutralization, wherein the at least one carboxylic acid group is incapable of reacting with the polyisocyanate; d) a chain extending such as water or an diamine chain extender including aliphatic diamine chain extenders or the combination of an aliphatic diamine chain extender with one or more diamines selected from aliphatic diamines and alicyclic diamines having 2 to 13 carbon atoms, or an amino-terminated polymer; and e) optionally a monoalcohol primary or secondary, as a blocking agent or chain terminator; and optionally an organic compound or a polymer with at least three primary or secondary amine groups.

The urethane prepolymers, also known as capped glycols, can generally be conceptualized as the reaction product of a polyol, a polyisocyanate, and a compound capable of salt-forming upon neutralization, before the prepolymer is dispersed in water and is chain-extended. Such prepolymers can typically be made in one or more steps, with or without solvents which can be useful in reducing the viscosity of the prepolymer composition.

Depending on whether the prepolymer is dissolved in a less volatile solvent (such as NMP) which will remain in the dispersion; dissolved in a volatile solvent such as acetone or methylethyl ketone (MEK), which can be later removed; or is dispersed in water without any solvent; the dispersion process can be classified in practice as the solvent process, acetone process, or prepolymer mixing process, respectively. The prepolymer mixing process has environmental and economical advantages, and may be used in the preparation of aqueous dispersion with substantially no added solvent.

In the prepolymer mixing process, it is important that the viscosity of the prepolymer is adequately low enough, with or without dilution by a solvent, to be transported and dispersed in water. Polyurethaneurea dispersions derived from such a prepolymer, which meet this viscosity requirement and do not have any organic solvent in the prepolymer or in the dispersion are provided. The prepolymer is the reaction product of a polyol, a diisocyanate and a diol compound.

Solvent-free, stable, aqueous polyurethane dispersions can be processed and applied directly as adhesive materials (*i.e.,* without the need of any additional adhesive materials) for coating, bonding, and lamination of to substrates, by conventional techniques. Aqueous polyurethane dispersions may be provided with: essentially no emission of volatile organic materials; acceptable curing time in production; and good adhesion strength, heat resistance, and stretch/recovery properties in finished products and in practical applications.

Shaped articles, such as films may be prepared from the aqueous polyurethaneurea dispersion formed by the method of the invention, such as by casting and drying the dispersions. The films which may or may not be adhesive can be coated on a release paper or directly applied to a substrate including textile fabrics for bonding and lamination. The adhesion can be activated, by applying heat and/or pressure onto a substrate and the adhesive film, with a residence time of less than one minute, for example, from about 15 seconds to about 60 seconds. The thus bonded articles have good stretch/recovery properties and are expected to be durable in normal wear and wash cycles.

As used herein, the term "porous" refers to a substrate that includes voids or holes in the surface or at any point within or through the thickness of the substrate or to any material of which the articles of the present invention may come into contact.

As used herein, the term "pressing" or "pressed" refers to an article that has been subjected to heat and/or pressure to provide a substantially planar structure.

As used herein, the term "foam" refers to any suitable foam that may be used in fabric construction such as polyurethane foam.

As used herein, the term "dispersion" refers to a system in which the disperse phase consists of finely divided particles, and the continuous phase can be a liquid, solid or gas.

As used herein, the term "aqueous polyurethane dispersion" refers to a composition containing at least a polyurethane or polyurethane urea polymer or prepolymer (such as the polyurethane prepolymer described herein), optionally including a solvent, that has been dispersed in an aqueous medium, such as water, including de-ionized water.

As used herein, the term "solvent," unless otherwise indicated, refers to a non-aqueous medium, wherein the non-aqueous medium includes organic solvents, including volatile organic solvents (such as acetone) and somewhat less volatile organic solvents (such as N-methylpyrrolidone (NMP)).

As used herein, the term "solvent-free" or "solvent-free system" refers to a composition or dispersion wherein the bulk of the composition or dispersed components has not been dissolved or dispersed in a solvent.

As used herein, the term shaped article may refer any polyurethaneurea composition including, films, tapes, dots, webs, stripes, beads, and foam. A film may describe a sheet material of any shape. A tape may describe a film in narrow strip form, including a narrow strip of from about 0.5 cm to about 3 cm. A film may be in the form of a tape. As used herein, the term "shaped article" refers to a layer comprising an aqueous polyurethane dispersion (such as the aqueous polyurethane dispersion containing the polyurethane prepolymer described herein) that can be directly applied to a substrate or release paper, which can be used for adhesion and/or to form a rigid or an elastic article.

As used herein, the term "article" refers to an article which comprises a dispersion or shaped article and a substrate, for example a textile fabric and release paper, which may or may not have at least one elastic property, in part, due to the application of a dispersion or shaped article as described herein. The article may be in any suitable configuration such as one-dimensional, two-dimensional and/or three-dimensional.

As used herein, the term "fabric" is meant to include any knitted, woven or nonwoven material. Knitted fabrics may be flat knit, circular knit, warp knit, narrow elastic, or lace. Woven fabrics may be of any construction, for example sateen, twill, plain weave, oxford weave, basket weave, or narrow elastic. Nonwoven materials may be one of meltblown, spun bonded, wet-laid, carded fiber-based staple webs, and the like.

As used herein, the term "substrate" refers to any material to which the films or dispersions of the present invention may come into contact. A substrate can be substantially one dimensional as is a fiber, two dimensional as in a planar sheet, or a three dimensional article or a bumpy sheet. A planar sheet for example may comprise textile fabric, paper, flocked article, and web. A three dimensional article for example may comprise leather and foam. Other substrates may include wood, paper, plastic, metal, and composites such as concrete, asphalt, gymnasium flooring, and plastic chips.

As used herein, the term "hard yarn" refers to a yarn which is substantially non-elastic.

As used herein, the term "molded" article refers to a result by which the shape of an article or shaped article is changed in response to application of heat and/or pressure.

As used herein, the term "derived from" refers to forming a substance out of another object. For example, a film may be derived from a dispersion which has been dried.

As used herein, the term "modulus" refers to a ratio of the stress on an item expressed in force per unit linear density or area.

Multiple layer articles include at least one layer of a polyurethaneurea composition in the form of a film or dispersion. These articles have at least two layers including at least one polyurethaneurea composition. The polyurethaneurea composition may form one of the layers, for example, as a polyurethaneurea composition on a substrate. The polyurethaneurea composition may be in any suitable form such as a film or dispersion. The polyurethaneurea composition may be placed adjacent to or between the layers and also may provide stretch and recovery, increased elastic modulus, adhesion, moldability, shape retention, and flexibility properties for the article. These articles may be formed into fabrics and/or garments.

An article may include a multiple layer article including three or more layers where one layer is a film, the film may be an intermediate layer between two fabric layers, between two foam layers, between a fabric layer and a foam layer, or adjacent to a foam layer which is adjacent to a fabric layer. Combinations of these fabric/ foam/ film arrangements are also contemplated. For example, the article may include, in order, a fabric layer, a foam layer, a film layer, a foam layer, and a fabric layer. This article includes two separate fabric layers, two separate foam layers and a film layer. In any of these articles, the polyurethaneurea film may be replaced with a polyurethaneurea dispersion. Therefore, the article may include one or more polyurethaneurea film and one or more polyurethaneurea dispersion layer.

Where there are two or more layers, the polyurethaneurea composition may form the external layer. Including the polyurethaneurea composition on an external surface forms many advantageous functions. For example, the polyurethaneurea composition may provide an anchor or area of increased friction to reduce the relative movement between the article including the polyurethaneurea composition and an external substrate. This is particularly useful when the article is an undergarment including a skin-contacting surface (where the wearer's skin is the substrate). Alternatively, the substrate may be outer clothing which is in contact with the polyurethaneurea composition of the inventive article. Where the substrate is outer clothing of a wearer and the article is worn as an undergarment, the article prevents or reduces the relative movement of the outer garment. In addition, an outer garment (e.g. a dress) may include a polyurethaneurea composition to maintain the relative placement of an inner garment (e.g. a slip).

After the layers of fabric, foam, and the polyurethaneurea composition have been selected, they may subsequently be adhered through pressing or molding to form flat or shaped articles. The processes to prepare the pressed and molded articles include the use of pressure and heat as necessary. For example, heat may be applied at about 150°C to about 200°C or about 180°C to about 190°C, including about 185°C for a sufficient time to achieve a molded article. Suitable times for application of heat include, but are not limited to, from about 30 sec to about 360 sec including from about 45 sec to about 120 sec. Bonding may be effected by any known method, including but not limited to, microwave, infrared, conduction, ultrasonic, pressure application over time (i.e. clamping) and combinations thereof.

Due the application of heat and pressure to the articles including polyurethaneurea films or dispersion and given that polyurethaneurea films prepared from the dispersions and fabrics are themselves porous materials, it is recognized that the film or dispersion may partially or completely impregnate the fabric or foam of the article. For example, the polyurethaneurea composition may form a layer which is partially separate from the surrounding layers, or may be completely transferred to the surrounding layer or layers to form an integrated article without a distinguishably separate polyurethaneurea composition layer.

One application of the multi-layer articles of the present invention is body-shaping garments such as brassieres (especially in cups or wings) and men's undergarments. These articles can provide the desirable features of comfort, body shaping and support while still providing comfort, breathability, air permeability, moisture/vapor transport, wicking, and combinations thereof. In the articles, the layers may take on predetermined shapes and may be arranged in predetermined orientations relative to each other in the design of a molded or shaped article such as the cups of a brassiere construction. The layers of these fabrics may be used either alone or in combination with other materials that are sewn, glued or otherwise applied to the fabrics.

A system for the construction of a body-shaping garment with integrated shaping ability provided by the fabric is described. This system of construction may be used in a variety of different garment constructions such as activewear, sportswear, men's and women's intimate apparel such as bras, underwear, panties, shaping garments, legwear and hosiery such as pantyhose, ready-to-wear garments such as denim jeans, camisoles, tailored shirts, and pants among others. This construction may be applied to any formable body area. While many advantages of the fabric constructions are included, it is further recognized that the utility is not limited to garments, but also finds applicability with any shapeable or formable medium, including cushions for furniture which are also subject to movement and potential slipping of a fabric in contact with the shapeable area.

In order to add additional support and other features, the polyurethaneurea composition may be added to different areas of the article. For example, when a film is used, it may either extend through the entire area of the article or to a selected portion to provide different benefits. For example, a brassiere may include a layered fabric in the cup portion. In the brassiere cup, it can be useful to use a portion of film in the lower portion of the cup for support, in a central portion of the cup for modesty, in the side portion for shaping, or in specific areas for embellishment or decoration.

Reducing the amount of film in a multi-layer fabric to meet the needs of a fabric may also increase the air permeability of the fabric. As is shown in the examples, the polyurethaneurea compositions derived from the aqueous dispersion described herein provided greater air permeability than those derived from polyurethaneurea solutions. The films cast from the aqueous dispersions also performed better with respect to air permeability in comparison to commercially available thermoplastic polyurethane (TPU) films available from Bemis. Air permeability may also be increased by altering the film to make it porous or to become porous (i.e. "latent" breathability) or by perforating the film.

Another advantage of the films cast from the aqueous dispersions is with respect to the feel or tactility of the films. They provide a softer feel compared to silicone rubber or the commercially available TPU films while maintaining the desired friction to reduce movement that is a further advantage for skin contact applications. Also lower bending modulus gives better drape and fabric hand.

The polyurethaneurea compositions provide additional benefits especially as compared to commercially available thermoplastic polyurethaneurea compositions, when used in a garment. These benefits include shape retention, shaping ability, adhesion, maintaining a fraction of the substrates, moisture management, and vapor permeability.

The polyurethaneurea compositions may be added in other constructions depending on the desired function which may be a visual aesthetic. The polyurethaneurea films or dispersions may be added to an article, fabric or garment to be molded into a design, to adhere embellishments such as decorative fabrics and glitter, in the form of a label or logo, and combinations thereof.

Depending on the desired effect of the polyurethaneurea composition when applied as a film or dispersion from the aqueous dispersion described herein, the weight average molecular weight of the polymer in the film may vary from about 40,000 to about 250,000, including from about 40,000 to about 150,000; from about 100,000 to about 150,000; and about 120,000 to about 140,000.

The polyurethaneurea composition may act as an adhesive to attach two or more layers of fabric or foam, or to attach a layer of fabric to foam. One suitable method for accomplishing this is to apply a dispersion to a layer by any suitable method. Methods for applying the dispersions include spraying, kissing, printing, brushing, dipping, padding, dispensing, metering, painting, and combinations thereof. This may be followed by application of heat and/or pressure.

Other adhesives may be included in the multiple layer articles. Examples of adhesives include thermoset or thermoplastic adhesives, pressure sensitive adhesives, hot melt adhesives, and combinations thereof. The adhesive may be used to adhere the different layers and may be applied to any of the fabric, foam or polyurethaneurea films or dispersion. Moreover, the polyurethaneurea aqueous dispersions may also be used as an adhesive to adhere more than one layer of any fabric, foam or polyurethaneurea film as described.

As described above, there are a variety of fabric constructions that are useful for the articles mentioned herein. Furthermore, the polyurethane composition may be either a film or a dispersion. In addition, the polyurethaneurea composition may provide structural properties, flexibility, adhesion, or any combination of these. The order of layer arrangement may be (1) fabric layer, foam layer, polyurethaneurea composition layer; (2) fabric layer, foam layer, polyurethaneurea composition layer, foam layer, fabric layer; (3) fabric layer, polyurethaneurea composition layer, fabric layer; (4) foam layer, polyurethaneurea layer, foam layer; (5) foam layer, polyurethaneurea composition layer; (6) fabric layer, polyurethaneurea layer; or any combination of these which may be combined to achieve more layers in the fabric construction. An adhesive may be included to adhere any of the layers, including wherein the polyurethaneurea composition is the adhesive.

A variety of different fibers and yarns may be used with the fabrics described. These include cotton, wool, acrylic, polyamide (nylon), polyester, spandex, regenerated cellulose, rubber (natural or synthetic), bamboo, silk, soy or combinations thereof.

The components of the polyurethaneurea compositions are described in more detail below:

### Polyols

Polyol components suitable as a starting material for preparing urethane prepolymers, according to the invention, are polyether glycols, polycarbonate glycols, and polyester glycols of number average molecular weight of about 600 to about 3,500 or about 4,000.

Examples of polyether polyols that can be used include those glycols with two or more hydroxy groups, from ring-opening polymerization and/or copolymerization of ethylene oxide, propylene oxide, trimethylene oxide, tetrahydrofuran, and 3-methyltetrahydrofuran, or from condensation polymerization of a polyhydric alcohol, preferably a diol or diol mixtures, with less than 12 carbon atoms in each molecule, such as ethylene glycol, 1,3-propanediol, 1,4-butanediol, 1,5-pentanediol 1,6-hexanediol, neopentyl glycol, 3-methyl-1,5-pentanediol, 1,7-heptanediol, 1,8-octanediol, 1,9-nonanediol, 1,10-decanediol and 1,12-dodecanediol. A linear, bifunctional polyether polyol is preferred, and a poly(tetramethylene ether) glycol of molecular weight of about 1,700 to about 2,100, such as Terathane® 1800 (Invista) with a functionality of 2, is particularly preferred in the present invention.

Examples of polyester polyols that can be used include those ester glycols with two or more hydroxy groups, produced by condensation polymerization of aliphatic polycarboxylic acids and polyols, or their mixtures, of low molecular weights with no more than 12 carbon atoms in each molecule. Examples of suitable polycarboxylic acids are malonic acid, succinic acid, glutaric acid, adipic acid, pimelic acid, suberic acid, azelaic acid, sebacic acid, undecanedicarboxylic acid, and dodecanedicarboxylic acid. Examples of suitable polyols for preparing the polyester polyols are ethylene glycol, 1,3-propanediol, 1,4-butanediol, 1,5-pentanediol 1,6-hexanediol, neopentyl glycol, 3-methyl-1,5-pentanediol, 1,7-heptanediol, 1,8-octanediol, 1,9-nonanediol, 1,10-decanediol and 1,12-dodecanediol. A linear bifunctional polyester polyol with a melting temperature of about 5°C to about 50°C is preferred.

Examples of polycarbonate polyols that can be used include those carbonate glycols with two or more hydroxy groups, produced by condensation polymerization of phosgene, chloroformic acid ester, dialkyl carbonate or diallyl carbonate and aliphatic polyols, or their mixtures, of low molecular weights with no more than 12 carbon atoms in each molecule. Examples of suitable polyols for preparing the polycarbonate polyols are diethylene glycol, 1,3-propanediol, 1,4-butanediol, 1,5-pentanediol, 1,6-hexanediol, neopentyl glycol, 3-methyl-1,5-pentanediol, 1,7-heptanediol, 1,8-octanediol, 1,9-nonanediol, 1,10-decanediol and 1,12-dodecanediol. A linear, bifunctional polycarbonate polyol with a melting temperature of about 5°C to about 50°C is preferred.

### Polyisocyanates

Examples of suitable polyisocyanate components include diisocyanates such as 1,6-diisocyanatohexane, 1,12-diisocyanatododecane, isophorone diisocyanate, trimethyl-hexamethylenediisocyanates, 1,5-diisocyanato-2-methylpentane, diisocyanato-cyclohexanes, methylene-bis(4-cyclohexyl isocyanate), tetramethyl-xylenediisocyanates, bis(isocyanatomethyl) cyclohexanes, toluenediisocyanates, methylene bis(4-phenyl isocyanate), phenylenediisocyanates, xylenediisocyanates, and a mixture of such diisocyanates. For example the diisocyanate may be an aromatic diisocyanate such phenylenediisocyanate, tolylenediisocyanate (TDI), xylylenediisocyanate, biphenylenediisocyanate, naphthylenediisocyanate, diphenylmethanediisocyanate (MDI), and combinations thereof.

The polyisocyanate component, suitable as another starting material for making urethane prepolymers according to the invention, can be an isomer mixture of diphenylmethane diisocyanate (MDI) containing 4,4'-methylene bis(phenyl isocyanate) and 2,4'- methylene bis(phenyl isocyanate) in the range of 4,4'-MDI to 2,4'-MDI isomer ratios of between about 65:35 to about 35:65, preferably in the range of about 55:45 to about 45:55 and more preferably at about 50:50. Examples of suitable polyisocyanate components include Mondur® ML (Bayer), Lupranate® MI (BASF), and Isonate® 50 O,P' (Dow Chemical).

### Diols

Diol compounds, suitable as further starting materials for preparing urethane prepolymers according to the invention, include at least one diol compound with: (i) two hydroxy groups capable of reacting with the polyisocyanates; and (ii) at least one carboxylic acid group capable of forming salt upon neutralization and incapable of reacting with the polyisocyanates (b). Typical examples of diol compounds having a carboxylic acid group, include 2,2-dimethylopropionic acid (DMPA), 2,2-dimethylobutanoic acid, 2,2-dimethylovaleric acid, and DMPA initiated caprolactones such as CAPA® HC 1060 (Solvay). DMPA is preferred in the present invention.

### Neutralizing Agents

Examples of suitable neutralizing agents to convert the acid groups to salt groups include: tertiary amines (such as triethylamine, N,N-diethylmethylamine, N-methylmorpholine, N,N-diisopropylethylamine, and triethanolamine) and alkali metal hydroxides (such as lithium, sodium and potassium hydroxides). Primary and/or secondary amines may be also used as the neutralizing agent for the acid groups. The degrees of neutralization are generally between about 60% to about 140%, for example, in the range of about 80% to about 120% of the acid groups.

### Chain Extenders

The chain extenders useful with the present invention include diamine chain extenders and water. Many examples of useful chain extenders are known by those of ordinary skill in the art. Examples of suitable diamine chain extenders include: 1,2-ethylenediamine, 1,4-butanediamine, 1,6-hexamethylenediamine, 1,12-dodecanediamine, 1,2-propanediamine, 2-methyl-1,5-pentanediamine, 1,2-cyclohexanediamine, 1,4-cyclohexanediamine, 4,4'-methylene-bis(cyclohexylamine), isophorone diamine, 2,2-dimethyl-1,3-propanediamine, *meta-*tetramethylxylenediamine, and Jeffamine® (Texaco) of molecular weight less than 500.

### Surface Active Agents

Examples of suitable surface active agents (surfactants) include: anionic, cationic, or nonionic dispersants or surfactants, such as sodium dodecyl sulfate, sodium dioctyl sulfosuccinate, sodium dodecylbenzenesulfonate, ethoxylated alkylphenols such as ethoxylated nonylphenols, and ethoxylated fatty alcohols, lauryl pyridinium bromide, polyether phosphates and phosphate esters, modified alcohol-ethoxylates, and combinations thereof.

### Blocking Agents

The blocking agent for isocyanate groups is a monofunctional alcohol. The blocking agent may be added at any time prior to formation of the prepolymer, during the formation of the prepolymer, or after the formation of the prepolymer including before and after dispersing the prepolymer into an aqueous medium such as deionized water. Based on the weight of the prepolymer, the blocking agent may be included in an amount from about 0.05% to about 10.0%, including about 0.1% to about 6.0% and about 1.0% to about 4.0%. Based on the weight of the final dispersion, the blocking agent may be present in an amount from about 0.01% to about 6.0%, including about 0.05% to about 3%, and about 0.1 % to about 1.0%.

The inclusion of a blocking agent permits control over the weight average molecular weight of the polymer in the dispersion as well as providing control over the polymer molecular weight distribution. The effectiveness of the blocking agent to provide this control depends on the type of the blocking agent and when the blocking agent is added during the preparation of the dispersion. For example, a monofunctional alcohol may be added prior to the formation of the prepolymer, during or after the formation of the prepolymer. The monofunctional alcohol blocking agent may also be added to the aqueous medium into which the prepolymer is dispersed, or immediately following the dispersion of the prepolymer into the aqueous medium. However, when control over the polymer molecular weight and the molecular weight distribution in the final dispersion is desired, the monofunctional alcohol may be most effective if added and reacted as part of the prepolymer before it is dispersed. If the monofunctional alcohol is added to the aqueous medium during or after dispersing the prepolymer, its effectiveness in controlling the polymer molecular weight will be reduced due to the competing chain extension reaction.

Examples of monofunctional alcohols useful with the present invention include at least one member selected from the group consisting of aliphatic and cycloaliphatic primary and secondary alcohols with 1 to 18 carbons, phenol, substituted phenols, ethoxylated alkyl phenols and ethoxylated fatty alcohols with molecular weight less than about 750, including molecular weight less than 500, hydroxyamines, hydroxymethyl and hydroxyethyl substituted tertiary amines, hydroxymethyl and hydroxyethyl substituted heterocyclic compounds, and combinations thereof, including furfuryl alcohol, tetrahydrofurfuryl alcohol, N-(2-hydroxyethyl)succinimide, 4-(2-hydroxyethyl)morpholine, methanol, ethanol, butanol, neopentyl alcohol, hexanol, cyclohexanol, cyclohexanemethanol, benzyl alcohol, octanol, octadecanol, N,N-diethylhydroxylamine, 2-(diethylamino)ethanol, 2-dimethylaminoethanol, and 4-piperidineethanol, and combinations thereof.

When a monofunctional amine compound, such as a monofunctional dialkyl amine is used as a blocking agent for isocyanate groups, it may also be added at any time during preparation of the dispersion, desirably the monofunctional amine blocking agent is added to the water medium during or after the prepolymer dispersion. For example, the monofunctional amine blocking agent can be added to the water mixture immediately after the prepolymer is dispersed.

Examples of suitable mono-functional dialkylamine blocking agents include: N,N-diethylamine, N-ethyl-N-propylamine, N,N-diisopropylamine, N*-tert-*butyl-N-methylamine, N-*tert-*butyl-N-benzylamine, N,N-dicyclohexylamine, N-ethyl-N-isopropylamine, N*-tert-*butyl-N-isopropylamine, N-isopropyl-N-cyclohexylamine, N-ethyl-N-cyclohexylamine, N,N-diethanolamine, and 2,2,6,6-tetramethylpiperidine. The molar ratio of the amine blocking agent to the isocyanate groups of the prepolymer prior to dispersion in water generally should range from about 0.05 to about 0.50, for example from about 0.20 to about 0.40. Catalysts may be used for the de-blocking reactions.

Optionally at least one polymeric component (MW > about 500), with at least three or more primary and/or secondary amino groups per mole of the polymer, may be added to the water medium after the prepolymer is dispersed and the blocking agent is added. Examples of the suitable polymeric component include polyethylenimine, poly(vinylamine), poly(allylamine), and poly(amidoamine) dendrimers, and combinations thereof.

### Other Additives

Examples of suitable antifoaming or defoaming or foam controlling agents include: Additive 65 and Additive 62 (silicone based additives from Dow Corning), FoamStar® I 300 (a mineral oil based, silicone free defoamer from Cognis) and Surfynol™ DF 110L (a high molecular weight acetylenic glycol non-ionic surfactant from Air Products & Chemicals).

Examples of suitable rheological modifiers include: hydrophobically-modified ethoxylate urethanes (HEUR), hydrophobically-modified alkali swellable emulsions (HASE), and hydrophobically-modified hydroxy-ethyl cellulose (HMHEC).

Other additives that may be optionally included in the aqueous dispersion or in the prepolymer include: anti-oxidants, UV stabilizers, colorants, pigments, crosslinking agents, phase change materials (*i.e.,* Outlast®, commercially available from Outlast Technologies, Boulder, Colorado), antimicrobials, minerals *(i.e.,* copper), microencapsulated well-being additives (*i.e.,* aloe vera, vitamin E gel, aloe vera, sea kelp, nicotine, caffeine, scents or aromas), nanoparticles (*i.e.,* silica or carbon), calcium carbonate, flame retardants, antitack additives, chlorine degradation resistant additives, vitamins, medicines, fragrances, electrically conductive additives, and/or dye-assist agents. Other additives which may be added to the prepolymer or the aqueous dispersion comprise adhesion promoters, anti-static agents, anti-cratering agents, anti-crawling agents, optical brighteners, coalescing agents, electroconductive additives, luminescent additives, flow and leveling agents, freeze-thaw stabilizers, lubricants, organic and inorganic fillers, preservatives, texturizing agents, thermochromic additives, insect repellants, and wetting agents.

Optional additives may be added to the aqueous dispersion before, during, or after the prepolymer is dispersed.

The aqueous polyurethaneurea dispersions may be prepared on a commercial scale, for example, in batches greater than about 500 gallons or greater than about 1000 gallons. The dispersions may be made with or without the addition of an organic solvent. In a commercial scale preparation of an aqueous polyurethaneurea, the prepolymer may include a monofunctional alcohol blocking agent. Stable dispersions may be prepared with these prepolymers in the absence of added solvent. Examples of prepolymer compositions (shown on a weight percent basis based on the weight of the total prepolymer composition) are given in Table 1.

| Table 1 - Prepolymer Composition | | | | | | |
|---|---|---|---|---|---|---|
| Prepolymer Component | A | B | C | D | E | F |
| Polyether glycol | 71-76 | 74-79 | 76-80 | 71-76 | 74-79 | 76-80 |
| Polyisocyanate | 20-25 | 18-23 | 16-21 | 20-25 | 18-23 | 16-21 |
| Diol compound | 2-4 | 2-4 | 2-4 | 2-4 | 2-4 | 2-4 |
| Blocking Agent (monofunctional alcohol) | 0.2-0.5 | 0 | 0.05-0.3 | 0 | 0.1-0.4 | 0 |

The polyurethaneurea aqueous dispersions may include a variety of different compositions as described hereinabove. Suitable methods of preparation are illustrated in the Examples below. Compositions useful for the dispersions are set forth in Table 2. Any of the compositions in Tables 1 and 2 may be prepared on a commercial scale as described above.

| Table 2 - Dispersion Composition | | | | | | |
|---|---|---|---|---|---|---|
| Dispersion component | A | B | C | D | E | F |
| Polyether glycol | 30-34 | 25-29 | 28-32 | 30-34 | 25-29 | 28-32 |
| Polyisocyanate | 4-8 | 8-12 | 6-10 | 4-8 | 8-12 | 6-10 |
| Diol compound | 0.5-1.0 | 0.9-1.3 | 0.7-1.2 | 0.5-1.0 | 0.9-1.3 | 0.7-1.2 |
| Deionized water | 53-58 | 57-62 | 55-60 | 53-58 | 57-62 | 55-60 |
| Surface active agent | .05-1.0 | 1.0-1.5 | 0.08-1.3 | .05-1.0 | 1.0-1.5 | 0.08-1.3 |
| Neutralizing agent | 0.7-1.0 | 0.4-0.7 | 0.5-0.8 | 0.7-1.0 | 0.4-0.7 | 0.5-0.8 |
| Blocking agent | 0 | 0.2-0.5 | 0.05-0.2 | 0.1-0.4 | 0 | 0 |
| Defoamer | 0.3-0.6 | 0.1-0.4 | 0.2-0.5 | 0.3-0.6 | 0.1-0.4 | 0.2-0.5 |
| Rheology modifier | 0.1-0.3 | 0.04-0.2 | 0.08-1.8 | 0.1-0.3 | 0.04-0.2 | 0.08-1.8 |
| Antioxidant | 0.3-0.6 | 0.6-0.9 | 0.4-0.7 | 0.3-0.6 | 0.6-0.9 | 0.4-.7 |

In the prepolymer mixing process, the prepolymer can be prepared by mixing starting materials, namely the polyol, the polyisocyanate and the diol compound together in one step and by reacting at temperatures of about 50°C to about 100°C for adequate time until all hydroxy groups are essentially consumed and a desired %NCO of the isocyanate group is achieved. Alternatively, this prepolymer can be made in two steps by first reacting a polyol with excess polyisocyanate, followed by reacting with a diol compound until a final desired %NCO of the prepolymer is achieved. For example, the %NCO may range from about 1.3 to about 2.6. Significantly, no organic solvent is necessary, but may be added or mixed with the starting materials before, during or after the reaction. Optionally, a catalyst may be used to facilitate the prepolymer formation.

In some embodiments, the prepolymer includes a polyol, a polyisocyanate, and a diol which are combined together and provided in the following ranges of weight percentages, based on the total weight of the prepolymer:
about 34% to about 89% of polyol, including from about 61% to about 80%;
about 10% to about 59% of polyisocyanate, including from about 18% to about 35%; and
about 1.0% to about 7.0% of diol compound, including from about 2.0% to about 4.0%.

A monofunctional alcohol may be included with the prepolymer in order to control the weight average molecular weight of the polyurethaneurea polymer in the complete dispersion.

The prepolymer prepared from the polyol, polyisocyanate, diol compound and optionally a blocking agent such as a monofunctional alcohol, may have a bulk viscosity (with or without solvent present) below about 6,000 poises, including below about 4,500 poises, measured by the falling ball method at 40°C. This prepolymer, containing carboxylic acid groups along the polymer chains (from the diol compound), can be dispersed with a high-speed disperser into a de-ionized water medium that includes: at least one neutralizing agent, to form an ionic salt with the acid; at least one surface active agent (ionic and/or non-ionic dispersant or surfactant); and, optionally, at least one chain extension component. Alternatively, the neutralizing agent can be mixed with the prepolymer before being dispersed into the water medium. At least one antifoam and/or defoam agent and/or at least one rheological modifier can be added to the water medium before, during, or after the prepolymer is dispersed.

Polyurethane aqueous dispersions may have a wide range of solids contents depending on the desired end use of the dispersion. Examples of suitable solids contents for the dispersions of some embodiments include from about 10% to about 50% by weight, for example from about 30% to about 45% by weight.

The viscosity of polyurethane aqueous dispersions may also be varied in a broad range from about 10 centipoises to about 100,000 centipoises depending on the processing and application requirements. For example, the viscosity is in the range of about 500 centipoises to about 30,000 centipoises. The viscosity may be varied by using an appropriate amount of thickening agent, such as from about 0 to about 2.0 wt%, based on the total weight of the aqueous dispersion.

In the solvent process or acetone process, an organic solvent may also be used in the preparation of films and dispersions. The organic solvent may be used to lower the prepolymer viscosity through dissolution and dilution and/or to assist the dispersion of solid particles of the diol compound having a carboxylic acid group such as 2,2-dimethylopropionic acid (DMPA) to enhance the dispersion quality. It may also serve the purposes of improving the film uniformity such as reducing streaks and cracks in the coating/film-forming process.

The solvents selected for these purposes are substantially or completely non-reactive to isocyanate groups, stable in water, and have a good solubilizing ability for DMPA, the formed salt of DMPA and triethylamine, and the prepolymer. Examples of suitable solvents include N-methylpyrrolidone, N-ethylpyrrolidone, dipropylene glycol dimethyl ether, propylene glycol n-butyl ether acetate, N,N-dimethylacetamide, N,N-dimethylformamide, 2-propanone (acetone) and 2-butanone (methylethylketone or MEK).

In the solvent process, the amount of solvent added to the films/dispersion may vary. When a solvent is include, suitable ranges of solvent include amounts of less than 50% by weight of the dispersion. Smaller amounts may also be used such as less than 20% by weight of the dispersion, less than 10% by weight of the dispersion, less than 5% by weight of the dispersion and less than 3% by weight of the dispersion.

In the acetone process, a greater amount of solvent may be added to the prepolymer composition prior to the preparation of the dispersion. Alternatively, the prepolymer may be prepared in the solvent. The solvent may also be removed from the dispersion after dispersion of the prepolymer such as under vacuum.

There are many ways to incorporate the organic solvent into the dispersion at different stages of the manufacturing process, for example:
1) The solvent can be added to and mixed with the prepolymer after the polymerization is completed prior to transferring and dispersing the prepolymer, the diluted prepolymer containing the carboxylic acid groups (from the diol compound) in the backbone and isocyanate groups at the chain ends is neutralized and chain extended while it is dispersed in water.
2) The solvent can be added and mixed with other ingredients such as polyol, polyisocyanate and diol compound to make a prepolymer in the solution, and then this prepolymer containing the carboxylic acid groups in the backbone and isocyanate groups at the chain ends in the solution is dispersed in water and at the same time it is neutralized and chain extended.
3) The solvent can be added with a neutralized salt of a diol compound and a neutralizing agent and mixed with a polyol and polyisocyanate to make the prepolymer prior to dispersion.
4) The solvent can be mixed with TEA, and then added to the formed prepolymer prior to dispersion.
5) The solvent can be added and mixed with the polyol, followed by the addition of the diol compound and neutralizing agent, and then the polyisocyanate in sequence to a neutralized prepolymer in solution prior to dispersion.
6) The solvent may also be removed from the dispersion, especially in the case of the acetone process.

The aqueous polyurethane dispersions are particularly suitable for adhesive shaped articles, which can be used for fabric bonding, lamination, and adhesion purposes when applied with heat and pressure for a relatively short period of time. Pressures, can for example, range from about atmospheric pressure to about 60 psi and times can range from less than about one second to about 30 minutes in accordance with the bonding method used.

Such shaped articles may be made by coating the dispersion onto a release paper and drying to remove water at temperatures below about 100°C through commercially available processes to form a film on the paper. This film can be a single layer or multiple layers. The multi-layer films can be formed from the same dispersion or different dispersion, adhered together by a lamination process or sequential coating process or direct coating process. The formed film sheets can be slit into strips of desired width and wound-up into spools for later use in applications to form stretch articles, for example textile fabrics. Examples of such applications include: stitch-less or seamless garment constructions; seam seal and reinforcement; labels and patches bonding to garments; and localized stretch/recovery enhancement. The adhesion bonding can be developed in the temperature range of from about 100°C to about 200°C, such as from about 130°C to about 200°C, for example, from about 140°C to about 180°C, in a period of 0.1 seconds to several minutes, for example, less than about one minute. Typical bonding machines are Sew Free (commercially available from SewSystems in Leicester, England), Macpi hemming machine (commercially available from the Macpi Group in Brescia, Italy), Framis hot air welding machine (commercially available from Framis Italy, s p.a. in Milano, Italy). This bonding is expected to be strong and durable when exposed to repeated wear, wash, and stretch in a textile fabric garment.

The coating, dispersion, film or shaped article may be pigmented or colored and also may be used as a design element.

In addition, articles with laminated films or dispersions can be molded. For example, fabric can be molded under conditions appropriate for the hard yarn in the fabric. Also, molding may be possible at temperature which will mold the shaped article or dispersion, but below temperatures suitable for molding the hard yarn.

Lamination can be carried out to secure a polyurethaneurea dispersion shaped article prepared from a polyurethaneurea dispersion to a fabric using any method wherein heat is applied to the laminate surface. Methods of heat application include, for example, ultrasonic, direct heat, indirect heat, and microwave. Such direct lamination may provide an advantage in view of other methods used in the art in that the shaped article may not only bond to the a substrate via a mechanical interaction but also via a chemical bond. For example, if the substrate has any reactive hydrogen functional groups, such groups may react with the isocyanate and hydroxyl groups on the dispersion or shaped article, thereby providing a chemical bond between the substrate and the dispersion or shaped article. Such chemical bonding of the dispersion or shaped article to the substrate can give a much stronger bond. Such bonding may occur in dry shaped articles that are cured onto a substrate or in wet dispersions that are dried and cured in one step. Materials without an active hydrogen include polypropylene fabrics and anything with a fluoropolymer or a silicone based surface. Materials with an active hydrogen include, for example, nylon, cotton, polyester, wool, silk, cellulosics, acetates, metals, and acrylics. Additionally, articles treated with acid, plasma, or another form of etching may have active hydrogens for adhesion. Dye molecules also may have active hydrogens for bonding.

Methods and means for applying the polyurethaneurea compositions include, but are not limited to: roll coating (including reverse roll coating); use of a metal tool or knife blade (for example, pouring a dispersion onto a substrate and then casting the dispersion into uniform thickness by spreading it across the substrate using a metal tool, such as a knife blade); spraying (for example, using a pump spray bottle); dipping; painting; printing; stamping; and impregnating the article. These methods can be used to apply the dispersion directly onto a substrate without the need of further adhesive materials and can be repeated if additional/heavier layers are required. The dispersions can be applied to any fabrics of knits, wovens or nonwovens made from synthetic, natural, or synthetic/natural blended materials for coating, bonding, lamination and adhesion purposes. The water in the dispersion can be eliminated with drying during the processing (for example, via air drying or use of an oven), leaving the precipitated and coalesced polyurethane layer on the fabrics to form an adhesive bond.

Where additional control of the particle size is desired, or where the dispersion includes larger particles that are not useful for certain applications of the dispersions, the dispersions may be filtered. Useful types of filters include self-cleaning wiped filters such as those available by Russell Finex, Pineville, NC and Eaton Filtration, Elizabeth, NJ. These filters wipe the surface of the filtration media to remove deposited solids during the filtration process.

A film may be affixed to a substrate or self-supporting (meaning that the film maintains its structure in the absence of a substrate). These films are formed as a result of casting and drying the dispersions. The dispersions may be cast and dried on a substrate of any suitable material including, but not limited to, textiles; fabrics, including wovens and knits; nonwovens; leather (real or synthetic); paper; metal; plastic; and scrim.

At least one coagulant may optionally be used to control or to minimize penetration of dispersions according to the invention into a fabric or other article. Examples of coagulants that may be used include calcium nitrate (including calcium nitrate tetrahydrate), calcium chloride, aluminum sulfate (hydrated), magnesium acetate, zinc chloride (hydrated) and zinc nitrate.

An example of a tool that can be used for applying dispersions is a knife blade. The knife blade can be made of metal or any other suitable material. The knife blade can have a gap of a predetermined width and thickness. The gap may range in thickness, for example, from 0.2 mils to 50 mils, such as a thickness of 5 mils, 10 mils, 15 mils, 25 mils, 30 mils, or 45 mils.

The thickness of the films, solutions, and dispersions may vary depending on the application. In the case of dry shaped articles, the final thickness may, for example, range from about 0.1 mil to about 250 mil, such as from about 0.5 mil to about 25 mil, including from about 1 to about 6 mil (one mil = one thousandth of an inch). Additional examples of suitable thicknesses include about 0.5 mil to about 12 mil, about 0.5 to about 10 mil, and about 1.5 mil to about 9 mil.

For aqueous dispersions, suitable amounts are described by the weight of the dispersion over unit area. The amount used may, for example, range from about 2.5 g/m² to about 6.40 kg/m², such as from about 12.7 to about 635 g/m², including from about 25.4 to about 152.4 g/m².

Types of planar sheets and tapes that can be coated with dispersions and shaped articles falling within the scope of the present invention include, but are not limited to: textile fabrics, including wovens and knits; nonwovens; leather (real or synthetic); paper, including specially coated "release papers," waxed papers and silicone coated papers; metal; plastic; and scrim.

End articles that can be produced using the dispersions and shaped articles falling within the scope of the present invention include, but are not limited to: apparel, which includes any type of garment or article of clothing; knitted gloves; upholstery; hair accessories; bed sheets; carpet and carpet backing; conveyor belts; medical applications, such as stretch bandages; personal care items, including incontinence and feminine hygiene products; and footwear. Articles coated with dispersion or covered with film or tape may be used as sound suppression articles.

Non-elastic fabrics laminated to shaped articles can have improved stretch and recovery and improved molding properties.

Articles comprising shaped articles, film, tape, or aqueous polyurethane dispersion may be molded. The articles may be made with multiple layers of substrate and shaped article, film, tape, or dispersion. The multi-layered articles also may be molded. Molded and non-molded articles may have different levels of stretch and recovery. The molded articles may comprise a body shaping or body supporting garment, such as a brassiere.

Examples of apparel or garments that can be produced using the dispersions and shaped articles described herein, include but are not limited to: undergarments, brassieres, panties, lingerie, swimwear, shapers, camisoles, hosiery, sleepwear, aprons, wetsuits, ties, scrubs, space suits, uniforms, hats, garters, sweatbands, belts, activewear, outerwear, rainwear, cold-weather jackets, pants, shirtings, dresses, blouses, mens and womens tops, sweaters, corsets, vests, knickers, socks, knee highs, dresses, blouses, aprons, tuxedos, bisht, abaya, hijab, jilbab, thoub, burka, cape, costumes, diving suit, kilt, kimono, jerseys, gowns, protective clothing, sari, sarong, skirts, spats, stola, suits, straitjacket, toga, tights, towel, uniform, veils, wetsuit, medical compression garments, bandages, suit interlinings, waistbands, and all components therein.

Methods for performing and overcoming common problems in reverse roll coating are described in Walter, et al., "Solving common coating flaws in Reverse Roll Coating," AIMCAL Fall Technical Conference (October 26-29, 2003).

An article comprising the shaped article and a substrate wherein the shaped article and the substrate are attached to form a laminate whereby coefficient of friction of the elastic laminate is greater than that of the substrate alone is described. Examples of this are a waistband with a coating or film comprising the aqueous polyurethane dispersion which prevents slippage of the garment from another garment such as a blouse or shirt, or alternately prevents slippage of the waistband on the skin of the garment wearer.

Also described is an article comprising a polyurethaneurea composition and a substrate wherein the modulus of the shaped article varies along the length, or alternately the width, of the article. For example, a substrate such as fabric can be treated with two feet (61 cm) of a polyurethaneurea composition such as a one inch (2.5 cm) wide adhesive tape. An additional layer of adhesive can be applied by painting three two inches (5 cm) by one inch segments along the length of the one inch wide adhesive tape to form composite structure.

Shaped article, for example, films of the aqueous polyurethaneurea dispersions, may have the following properties:
- set after elongation of from about 0 to 10%, for example from about 0 to 5%, typically from about 0 to about 3%,
- elongation of about 400 to about 800%, and
- tenacity of about 0.5 to about 3 Mpa.

Laminates prepared from articles and substrates may have the following properties:
- peel strength after 50 washes wherein at least 50% of the strength is maintained from the same before washing,
- air permeability of at least about 0 to about 0.5 cfm, and
- moisture vapor permeability of at least about 0 to about 300 g/m2 over 24h.

### Examples

TERATHANE® 1800 is a linear polytetramethylene ether glycol (PTMEG), with a number average molecular weight of 1,800 (commercially available from INVISTA S.à. r.L., of Wichita, KS);
Pluracol® HP 4000D is a linear, primary hydroxyl terminated polypropylene ether glycol, with a number average molecular weight of 4000 (commercially available from BASF, Bruxelles, Belgium);
Mondur® ML is an isomer mixture of diphenylmethane diisocyanate (MDI) containing 50-60% 2,4'-MDI isomer and 50-40% 4,4'-MDI isomer (commercially available from Bayer, Baytown, TX);
Lupranate® MI is an isomer mixture of diphenylmethane diisocyanate (MDI) containing 45-55% 2,4'-MDI isomer and 55-45% 4,4'-MDI isomer (commercially available from BASF, Wyandotte, Michigan);
Isonate® 125MDR is a pure mixture of diphenylmethane diisocyanate (MDI) containing 98% 4,4'-MDI isomer and 2% 2,4'-MDI isomer (commercially available from the Dow Company, Midland, Michigan); and
DMPA is 2,2-dimethylopropionic acid.

The following prepolymer samples were prepared with MDI isomer mixtures, such as Lupranate® MI and Mondur® ML, containing a high level of 2,4'-MDI.

### Example 1

The preparation of the prepolymers was conducted in a glove box with nitrogen atmosphere. A 2000 ml PYREX® glass reaction kettle, which was equipped with an air pressure driven stirrer, a heating mantle, and a thermocouple temperature measurement, was charged with about 382.5 grams of Terathane® 1800 glycol and about 12.5 grams of DMPA. This mixture was heated to about 50°C with stirring, followed by the addition of about 105 grams of LUPRANATE® MI diisocyanate. The reaction mixture was then heated to about 90°C with continuous stirring and held at about 90°C for about 120 minutes, after which time the reaction was completed, as the %NCO of the mixture declined to a stable value, matching the calculated value (%NCO aim of 1.914) of the prepolymer with isocyanate end groups. The viscosity of the prepolymer was determined in accordance with the general method of ASTM D1343-69 using a Model DV-8 Falling Ball Viscometer (sold by Duratech Corp., Waynesboro, VA) operated at about 40°C. The total isocyanate moiety content, in terms of the weight percent of NCO groups, of the capped glycol prepolymer was measured by the method of S. Siggia, "Quantitative Organic Analysis via Functional Group", 3rd Edition, Wiley & Sons, New York, pp. 559-561 (1963).

### Example 2

The solvent-free prepolymer, as prepared according to the procedures and composition described in Example 1, was used to make a polyurethaneurea aqueous dispersion.

A 2,000 ml stainless steel beaker was charged with about 700 grams of de-ionized water, about 15 grams of sodium dodecylbenzenesulfonate (SDBS), and about 10 grams of triethylamine (TEA). This mixture was then cooled with ice/water to about 5°C and mixed with a high shear laboratory mixer with rotor/stator mix head (Ross, Model 100LC) at about 5,000 rpm for about 30 seconds. The viscous prepolymer, prepared in the manner as Example 1 and contained in a metal tubular cylinder, was added to the bottom of the mix head in the aqueous solution through flexible tubing with applied air pressure. The temperature of the prepolymer was maintained between about 50°C and about 70°C. The extruded prepolymer stream was dispersed and chain-extended with water under the continuous mixing of about 5,000 rpm. In a period of about 50 minutes, a total amount of about 540 grams of prepolymer was introduced and dispersed in water. Immediately after the prepolymer was added and dispersed, the dispersed mixture was charged with about 2 grams of Additive 65 (commercially available from Dow Corning®, Midland Michigan) and about 6 grams of diethylamine (DEA). The reaction mixture was then mixed for about another 30 minutes. The resulting solvent-free aqueous dispersion was milky white and stable. The viscosity of the dispersion was adjusted with the addition and mixing of Hauthane HA thickening agent 900 (commercially available from Hauthway, Lynn, Massachusetts) at a level of about 2.0 wt% of the aqueous dispersion. The viscous dispersion was then filtered through a 40 micron Bendix metal mesh filter and stored at room temperatures for film casting or lamination uses. The dispersion had solids level of 43% and a viscosity of about 25,000 centipoises. The cast film from this dispersion was soft, tacky, and elastomeric.

### Example 3

The solvent-free prepolymer, as prepared according to the procedures and composition described in Example 1, was used to make the polyurethaneurea aqueous dispersion of the present invention.

A 2,000 ml stainless steel beaker was charged with about 900 grams of de-ionized water, about 15 grams of sodium dodecylbenzenesulfonate (SDBS), and about 10 grams of triethylamine (TEA). This mixture was then cooled with ice/water to about 5 °C and mixed with a high shear laboratory mixer with rotor/stator mix head (Ross, Model 100LC) at about 5,000 rpm for about 30 seconds. The viscous prepolymer, prepared in the manner as Example 1 and contained in a metal tubular cylinder, was added to the bottom of the mix head in the aqueous solution through flexible tubing with applied air pressure. The temperature of the prepolymer was maintained between about 50 °C and about 70 °C. The extruded prepolymer stream was dispersed and chain-extended with water under the continuous mixing of about 5,000 rpm. In a period of about 50 minutes, a total amount of about 540 grams of prepolymer was introduced and dispersed in water. Immediately after the prepolymer was added and dispersed, the dispersed mixture was charged with about 2 grams of Additive 65 (commercially available from Dow Corning®, Midland Michigan) and about 6 grams of diethylamine (DEA). The reaction mixture was then mixed for about another 30 minutes. The resulting solvent-free aqueous dispersion was milky white and stable. The viscous dispersion was then filtered through a 40 micron Bendix metal mesh filter and stored at room temperatures for film casting or lamination uses. The dispersion had solids level of 40% and a viscosity of about 28 centipoises. The cast film from this dispersion was soft, tacky, and elastomeric.

### Example 4

The preparation procedures were the same as Example 2, except that DEA was not added into the dispersion after the prepolymer was mixed. Initially, the dispersion appeared to be no different from Example 2. When cast and dried, an elastic film was formed.

### Example 5

To a 35-gallon jacketed reactor was charged 41.25 kg of TERATHANE® 1800 glycol (commercial product of Invista), and mixed with 0.20 kg of 1-hexanol (commercial product of J.T. Baker), followed by the addition of 1.35 kg of powdery Bis-MPA® (commercial product of GEO) at 40°C. The temperature of the reactor was raised to 70°C over 30 minutes, while Bis-MPA® was being dispersed and dissolved in the glycol with vigorous agitation. Then, 11.32 kg of LUPRANATE® MI was charged to the reactor. The reaction mixture was allowed to react with agitation at temperatures between 89 to 99°C for 120 minutes in N₂ atmosphere. The prepolymer samples were taken for %NCO and viscosity measurements, which were determined to be 1.739 %NCO by titration method and 4782 poises by falling ball method at 40°C respectively. The prepolymer was cooled down to 85°C, and was then dispersed in a 10°C mixture containing 72.09 kg of de-ionized water, 1.439 kg of NACCONOL® 90G surfactant (commercial product of Stepan), 0.076 kg of DEE FO® 3000 (commercial product of Munzing/Ultra Additives) and 0.935 kg of triethylamine. A high shear rotor/stator disperser manufactured by Charles Ross & Son Company equipped on a 55-gallon tank was used for dispersion, while the prepolymer was fed in multiple streams to the bottom of the disperser head. The dispersion was completed in a period of 30 minutes. After continued dispersing for additional 10 minutes, 0.362 kg of Additive 65 defoam agent (commercial product of Dow Corning) was added and mixed into the dispersion. The milky dispersion was further mixed for overnight at a temperature of 25±5°C to fully complete the chain extension reaction. This as-made dispersion (with a solids level of 39.72% and a Brookfield viscosity of 20 centipoises) was then filtered through a self cleaning filter (Model 803 single length in-line 30400 from Russell Finex Inc.) with a 100 micron screen. The filtered dispersion was collected in a drum and was mixed with 0.770 kg of LOWINOX® GP-45 antioxidant (commercial product of Great Lakes) and thickened with HA-900 thickener (commercial product of Hauthaway) to 2500 centipoises. The dispersion was filtered again through a 100 micron screen for coating applications. The coated polymer film had a weight average molecular weight of 93450, a number average molecular weight of 31850, and a polydispersity of 2.93 as measured by GPC.

### Example 6

The same procedures as described in Example 5 were used, except that the amount of hexanol was reduced to 5.0 grams. The coated polymer film from this dispersion had a weight average molecular weight of 198650, a number average molecular weight of 53400, and a polydispersity of 3.72 as measured by GPC.

## Claims

1. A method of preparing a polyurethaneurea aqueous dispersion comprising
(a) preparing a prepolymer composition comprising the reaction product of
(i) at least one polyol selected from polyethers, polyesters, polycarbonates, and combinations thereof, wherein the polyol has a number average molecular weight of 600 to 4000;
(ii) a polyisocyanate comprising a member selected from the group consisting of aromatic diisocyanates, aliphatic diisocyanates, cycloaliphatic diisocyanates, and combinations thereof;
(iii) at least one diol compound comprising: (i) hydroxy groups capable of reacting with polyisocyanate, and (ii) at least one carboxylic acid group capable of forming a salt upon neutralization, wherein said at least one carboxylic acid group is incapable of reacting with the polyisocyanate;
wherein said prepolymer has a %NCO of 1.3 to 2.6;
(b) dispersing the prepolymer in an aqueous composition comprising a neutralizing agent and a surfactant;
(c) chain extending the prepolymer to form the polyurethaneurea dispersion wherein the polyurethaneurea polymer has a weight average molecular weight from 40,000 to 250,000; and
(d) controlling the molecular weight of the polymer through the use of a blocking agent for isocyanate groups;
wherein said blocking agent is at least one mono-functional alcohol and said blocking agent is added to said prepolymer composition at a time selected from (a) before formation of said prepolymer, (b) after formation of said prepolymer, (c) during formation of said prepolymer, and combinations thereof.

2. The method of claim 1, wherein said blocking agent is added to said prepolymer composition at a time selected from (a) before formation of said prepolymer, (b) during formation of said prepolymer, and combinations thereof.

3. The method of claim 1, wherein said controlling the molecular weight includes controlling the weight average molecular weight and controlling the polymer molecular weight distribution.

4. A polyurethaneurea aqueous dispersion formed by the method of claim 1.

5. The polyurethaneurea aqueous dispersion of claim 4, wherein the prepolymer composition has a bulk viscosity from 4,500 to 6,000 poises, measured by the falling ball method at 40°C.

6. The polyurethaneurea aqueous dispersion of claim 4, wherein the solid content is between 30% to 45% by weight.

7. A composition comprising the polyurethaneurea aqueous dispersion of claim 4 or a film formed therefrom.

8. The method of claim 1, wherein the polyisocyanate consists essentially of aromatic diisocyanates.

## Patentansprüche

1. Verfahren zur Herstellung einer wässrigen Polyurethanharnstoffdispersion, bei dem man
(a) eine Prepolymerzusammensetzung herstellt, die das Reaktionsprodukt von
(i) mindestens einem Polyol, das aus Polyethern, Polyestern, Polycarbonaten und Kombinationen davon ausgewählt ist, wobei das Polyol ein zahlenmittleres Molekulargewicht von 600 bis 4000 aufweist;
(ii) einem Polyisocyanat, umfassend ein Mitglied aus der Gruppe bestehend aus aromatischen Diisocyanaten, aliphatischen Diisocyanaten, cycloaliphatischen Diisocyanaten und Kombinationen davon;
(iii) mindestens einer Diolverbindung, umfassend: (i) Hydroxygruppen, die zur Reaktion mit Polyisocyanat befähigt sind, und (ii) mindestens eine Carbonsäuregruppe, die bei Neutralisation zur Bildung eines Salzes befähigt ist, wobei die mindestens eine Carbonsäuregruppe nicht zur Reaktion mit dem Polyisocyanat befähigt ist;
umfasst, wobei das Prepolymer einen %NCO von 1,3 bis 2,6 aufweist;
(b) das Prepolymer in einer wässrigen Zusammensetzung, die ein Neutralisationsmittel und ein Tensid umfasst, dispergiert;
(c) das Prepolymer zur Bildung der Polyurethanharnstoffdispersion kettenverlängert, wobei das Polyurethanharnstoff-Polymer ein gewichtsmittleres Molekulargewicht von 40.000 bis 250.000 aufweist; und
(d) das Molekulargewicht des Polymers durch die Verwendung eines Blockierungsmittels für Isocyanatgruppen regelt;
wobei es sich bei dem Blockierungsmittel um mindestens einen monofunktionellen Alkohol handelt und das Blockierungsmittel zu einem Zeitpunkt zu der Prepolymerzusammensetzung gegeben wird, der aus (a) vor der Bildung des Prepolymers, (b) nach der Bildung des Prepolymers, (c) während der Bildung des Prepolymers und Kombinationen davon ausgewählt wird.

2. Verfahren nach Anspruch 1, bei dem das Blockierungsmittel zu einem Zeitpunkt zu der Prepolymerzusammensetzung gegeben wird, der aus (a) vor der Bildung des Prepolymers, (b) während der Bildung des Prepolymers und Kombinationen davon ausgewählt wird.

3. Verfahren nach Anspruch 1, bei dem die Regelung des Molekulargewichts die Regelung des gewichtsmittleren Molekulargewichts und die Regelung der Molekulargewichtsverteilung des Polymers umfasst.

4. Wässrige Polyurethanharnstoffdispersion, gebildet durch das Verfahren nach Anspruch 1.

5. Wässrige Polyurethanharnstoffdispersion nach Anspruch 4, wobei die Prepolymerzusammensetzung eine nach der Kugelfallmethode bei 40°C gemessene Volumenviskosität von 4500 bis 6000 Poise aufweist.

6. Wässrige Polyurethanharnstoffdispersion nach Anspruch 4, wobei der Feststoffgehalt zwischen 30 bis 45 Gew.-% liegt.

7. Zusammensetzung, umfassend die wässrige Polyurethanharnstoffdispersion nach Anspruch 4, oder ein daraus gebildeter Film.

8. Verfahren nach Anspruch 1, bei dem das Polyisocyanat im Wesentlichen aus aromatischen Diisocyanaten besteht.

## Revendications

1. Procédé de préparation d'une dispersion aqueuse de polyuréthane-urée comprenant
(a) la préparation d'une composition de prépolymère comprenant le produit de réaction de
(i) au moins un polyol choisi parmi des polyéthers, des polyesters, des polycarbonates, et des combinaisons de ceux-ci, le polyol ayant un poids moléculaire moyen en nombre de 600 à 4000 ;
(ii) un polyisocyanate comprenant un membre choisi dans le groupe constitué de diisocyanates aromatiques, diisocyanates aliphatiques, diisocyanates cycloaliphatiques, et des combinaisons de ceux-ci ;
(iii) au moins un composé diol comprenant : (i) des groupes hydroxy capables de réagir avec un polyisocyanate, et (ii) au moins un groupe acide carboxylique capable de former un sel par neutralisation, ledit au moins un groupe acide carboxylique étant incapable de réagir avec le polyisocyanate ;
dans lequel ledit prépolymère a un % NCO de 1,3 à 2,6 ;
(b) la dispersion du prépolymère dans une composition aqueuse comprenant un agent neutralisant et un tensioactif ;
(c) l'extension de chaîne du prépolymère pour former la dispersion de polyuréthane-urée, le polymère de polyuréthane-urée ayant un poids moléculaire moyen en poids de 40 000 à 250 000 ; et
(d) la régulation du poids moléculaire du polymère au moyen de l'utilisation d'un agent bloquant pour les groupes isocyanate ;
dans lequel ledit agent bloquant est au moins un alcool monofonctionnel et ledit agent bloquant est ajouté à ladite composition de prépolymère à un moment choisi parmi (a) avant la formation dudit prépolymère, (b) après la formation dudit prépolymère, (c) pendant la formation dudit prépolymère, et des combinaisons de ceux-ci.

2. Procédé de la revendication 1, dans lequel ledit agent bloquant est ajouté à ladite composition de prépolymère à un moment choisi parmi (a) avant la formation dudit prépolymère (b) pendant la formation dudit prèpolymère, et des combinaisons de ceux-ci.

3. Procédé de la revendication 1, dans lequel ladite régulation du poids moléculaire comprend la régulation du poids moléculaire moyen en poids et la régulation de la distribution de poids moléculaire du polymère.

4. Dispersion aqueuse de polyuréthane-urée formée par le procédé de la revendication 1.

5. Dispersion aqueuse de polyuréthane-urée de la revendication 4, dans laquelle la composition de prépolymère a une viscosité de volume de 4 500 à 6 000 poises, mesurée par la méthode de la chute de bille à 40 °C.

6. Dispersion aqueuse de polyuréthane-urée de la revendication 4, dans laquelle la teneur en matières solides est comprise entre 30 % et 45 % en poids.

7. Composition comprenant la dispersion aqueuse de polyuréthane-urée de la revendication 4 ou film formé à partir de celle-ci.

8. Procédé de la revendication 1, dans lequel le polyisocyanate est essentiellement constitué de diisocyanates aromatiques.
